(19) Europäisches Patentamt
European Patent Office
Office européen des brevets

(11) **EP 2 483 039 B1**

(12) **FASCICULE DE BREVET EUROPEEN**

(45) Date de publication et mention
de la délivrance du brevet:
**12.08.2015 Bulletin 2015/33**

(21) Numéro de dépôt: **10773117.6**

(22) Date de dépôt: **27.09.2010**

(51) Int Cl.:
**B25J 9/16** *(2006.01)*

(86) Numéro de dépôt international:
**PCT/FR2010/000640**

(87) Numéro de publication internationale:
**WO 2011/039429 (07.04.2011 Gazette 2011/14)**

(54) **SYSTEME ET PROCEDE DE RESTITUTION SYNCHRONE PAR UN ROBOT DE MOUVEMENTS D'UNE MAIN OU D'UN ORGANE D'EXTREMITE**

SYSTEM UND VERFAHREN ZUR SYNCHRONEN NACHAHMUNG DER BEWEGUNGEN EINER HAND ODER EINES ANDEREN ENDELEMENTS DURCH EINEN ROBOTER

SYSTEM AND METHOD FOR THE SYNCHRONOUS REPRODUCTION OF MOVEMENTS OF A HAND OR END MEMBER BY A ROBOT

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **29.09.2009 FR 0904652**

(43) Date de publication de la demande:
**08.08.2012 Bulletin 2012/32**

(73) Titulaire: **BL Robotics**
**91280 Saint Pierre du Perray (FR)**

(72) Inventeur: **BENCHIKH, Laredj**
**F-91250 Tigery (FR)**

(74) Mandataire: **Benech, Frédéric**
**Cabinet Benech**
**146-150, Avenue des Champs-Elysées**
**75008 Paris (FR)**

(56) Documents cités:
EP-A2- 1 973 021    WO-A1-2009/096408
DE-A1- 4 442 443    US-A- 6 016 385

- YOSHII K ET AL: "A biped robot that keeps steps in time with musical beats while listening to music with its own ears", INTELLIGENT ROBOTS AND SYSTEMS, 2007. IROS 2007. IEEE/RSJ INTERNATIONAL CONFERENCE ON, IEEE, PISCATAWAY, NJ, USA, 29 octobre 2007 (2007-10-29), pages 1743-1750, XP031222243, ISBN: 978-1-4244-0911-2
- CORISTINE M ET AL: "Design of a new PumaPaint interface and its use in one year of operation", IEEE INTERNATIONAL CONFERENCE ON ROBOTICS AND AUTOMATION - NEW ORLEANS, LA, USA, vol. 1, 26 avril 2004 (2004-04-26), - 1 mai 2004 (2004-05-01), pages 511-516, XP002590614, (IEEE Cat. No.04CH37508) IEEE Piscataway, NJ, USA ISBN: 0-7803-8232-3
- YASUO KUNIYOSHI ET AL: "LEARNING BY WATCHING: EXTRACTING REUSABLE TASK KNOWLEDGE FROM VISUAL OBSERVATION OF HUMAN PERFORMANCE", IEEE TRANSACTIONS ON ROBOTICS AND AUTOMATION, IEEE INC, NEW YORK, US LNKD-DOI:10.1109/70.338535, vol. 10, no. 6, 1 décembre 1994 (1994-12-01), pages 799-821, XP000482438, ISSN: 1042-296X

## Description

La présente invention concerne un système de restitution par un bras de robot des mouvements d'une main ou d'un organe d'extrémité, enregistrés à partir d'au moins un capteur numérique tel qu'une caméra CCD ou tous autres moyens de capture de l'image en numérique desdits mouvements, tels qu'une tablette graphique ou un capteur laser, ledit système comprenant le bras de robot et des moyens de traitement de l'image agencés pour former un premier fichier de points dans un premier repère associé audit capteur numérique.

Elle concerne également un procédé de restitution de mouvements d'une main ou d'un organe d'extrémité.

Elle trouve une application particulièrement importante bien que non exclusive, dans les domaines de l'art, du spectacle, de la télévision, du cinéma et plus généralement de l'évènementiel.

Mais elle est également applicable au domaine industriel par exemple pour être mise en oeuvre dans le cadre d'un procédé de pulvérisation de produits de peinture, d'étanchéité ou de collage pour l'industrie automobile ou autre.

En particulier elle permet la capture et la restitution des mouvements de l'auteur d'un geste de main tenant un organe d'extrémité comme une baguette, un crayon, un pinceau, un projecteur, un pistolet de peinture, une buse de pulvérisation de mastique ou un pistolet d'encollage.

Ce peut être la main d'un chef d'orchestre, d'un dessinateur, d'un créateur de lumières ou d'un opérateur dans une usine de production.

L'organe peut également être une caméra, un appareil photo, un écran ou tout autre outil.

De façon plus générale, par organe d'extrémité on entend un organe tenu ou fixé à l'extrémité d'un bras et qui est de ce fait de dimension relativement réduite.

On connaît déjà un système d'imitation de mouvements de la main d'un dessinateur par un bras robot (« Robot imitation : body schéma and body percept » - C.A.Acosta-Calderon and H.Hu - Woodhead Publishing Ltd - ABBI 2005 volume.2 n°3-4 pp131-148) qui propose une représentation du corps et de son imitation par un robot. Un moteur du bras robot est associé à chaque articulation et va permettre de simuler l'écriture. Outre qu'il est limité à la 2D, les résultats obtenus avec un tel système qui se révèle complexe, sont assez approximatifs.

On connaît également (WO2005046942) un dispositif d'apprentissage et de restitution dans lequel un fichier image est corrélé avec des instructions de comportement correspondant à l'attitude que l'on souhaite avoir et qui permet de commander le mouvement du robot articulé à partir de celui d'un démonstrateur.

On connaît aussi (DE 44 42 443) un système de transmission des informations nécessaires à l'enregistrement de mouvements du corps humain, qui sont ensuite transmises à un appareil qui peut refaire les mouvements en « playback ».

De tels dispositifs ou systèmes sont centrés sur la capture du mouvement du manipulateur et non sur celle de l'extrémité ou de l'objet à manipuler.

De plus les mouvements sont peu précis. Ils ne peuvent ainsi être synchronisés avec ceux de l'objet réel que si ces derniers ne sont pas trop vifs et/ou trop petits, et ce compte tenu notamment des temps de réaction nécessairement longs du robot mécanique.

La présente invention vise à proposer un système et un procédé répondant mieux que ceux antérieurement connus aux exigences de la pratique notamment en ce que elle va permettre une exécution par le robot avec une très grande précision et un parfait synchronisme des mouvements captés lors de l'étape de capture des mouvements de l'auteur du geste.

Elle met par ailleurs en oeuvre de façon nouvelle des moyens simples, peu coûteux et connus en eux-mêmes, ce qui présente un avantage supplémentaire.

Dans les domaines artistiques ou industriels, on comprend que la rapidité ou l'épaisseur du trait, selon que l'auteur du geste appuie plus ou moins sur sa baguette dans l'air pour un chef d'orchestre, sur son crayon sur le papier pour un dessinateur, ou sur un pistolet pour un peintre automobile ou sur sa torche pour un soudeur, sont complexes et difficiles à reproduire de façon satisfaisante.

Pour la première fois, cela devient possible grâce à l'invention qui prévoit notamment des moyens de calcul pour transformation géométrique de fichiers et des moyens de test de la synchronisation avec modifications d'un fichier spécifique de façon à ce que ladite synchronisation soit respectée et ce compte tenu des autres moyens par ailleurs mis en oeuvre.

Dans ce but l'invention propose notamment un système de restitution par un bras de robot des mouvements d'une main ou d'un organe d'extrémité enregistrés à partir d'au moins un capteur numérique de l'image desdits mouvements, comprenant le bras de robot et des moyens de traitement de l'image agencés pour former un premier fichier de points (P1, P2, ... P4000) dans un premier repère associé audit capteur numérique, caractérisé en ce que, les mouvements et leur restitution devant être synchronisés, il comprend

des moyens de génération d'un premier nuage formé par les points dudit premier fichier et d'ajustage des dimensions dudit premier nuage de points pour former un deuxième nuage de points à l'intérieur d'un champ de déplacement déterminé correspondant audit bras dans ledit premier repère associé au capteur,

des moyens de génération d'un deuxième fichier de points (P'$_1$, P'$_2$, ...) à partir dudit deuxième nuage ainsi ajusté en dimension,

des moyens de génération d'une trajectoire numérique du bras de robot et de centrage de ladite trajectoire à l'intérieur dudit champ de déplacement à partir dudit deuxième fichier,

des moyens de calcul agencés pour transformer géométriquement ledit deuxième fichier de points en un troisième fichier de points (PM'$_1$, PM'$_2$, ...) dans un deuxième repère associé au bras de robot,

des moyens de test de la synchronisation des mouvements avec ladite trajectoire numérique restituée et, en cas de test négatif, de modification du troisième fichier jusqu'à l'obtention de ladite synchronisation et

des moyens de commande de la trajectoire dudit bras de robot, à partir des données correspondant au troisième fichier synchronisé pour exécution synchronisée des mouvements par le bras de robot.

Dans des modes de réalisation avantageux, on a de plus recours à l'une et/ou à l'autre des dispositions suivantes :

- les moyens d'ajustage de la dimension du nuage de points mettent en oeuvre un algorithme appliquant un facteur d'échelle dans l'espace ;
- les moyens de test et de modification du troisième fichier pour arriver à la synchronisation mettent en oeuvre un algorithme d'interpolation linéaire;
- l'algorithme d'interpolation linéaire recalcule par itération le nombre de points de la trajectoire à prendre en compte pour que la vitesse de calcul de la dite trajectoire soit synchronisée avec la vitesse de mouvement possible du bras de robot;
- les mouvements conduisant ou suivant une musique ou un fond sonore, le bras de robot est agencé pour être synchronisé avec ladite musique ou ledit fond sonore;
- les mouvements étant ceux du traçage d'un dessin ou de l'application d'une peinture, le bras du robot est agencé pour être synchronisé avec le mouvement de traçage du dit dessin ou d'application de ladite peinture.

L'invention propose également un procédé de restitution de mouvements d'une main ou d'un organe d'extrémité, par un bras de robot à partir d'au moins un capteur numérique de l'image desdits mouvements, dans lequel on traite l'image pour former un premier fichier de points dans un premier repère associé audit capteur numérique, caractérisé en ce que, les mouvements et leur restitution devant être synchronisés,

on génère un premier nuage formé par les points dudit premier fichier et on ajuste les dimensions dudit premier nuage de points pour former un deuxième nuage de points à l'intérieur d'un champ de déplacement déterminé correspondant audit bras dans ledit premier repère associé au capteur,

on génère un deuxième fichier de points à partir dudit deuxième nuage ainsi ajusté en dimension,

on génère une trajectoire du bras de robot et on centre ladite trajectoire à l'intérieur dudit champ de déplacement à partir dudit deuxième fichier,

on transforme géométriquement ledit deuxième fichier de points dans un troisième fichier de points dans un deuxième repère associé au bras de robot,

on teste la synchronisation des mouvements et, en cas de test négatif, on modifie le troisième fichier jusqu'à l'obtention de ladite synchronisation et on commande la trajectoire dudit bras de robot à partir des données correspondant au troisième fichier synchronisé, pour exécuter lesdits mouvements par le bras de robot.

Avantageusement pour ajuster la dimension du nuage de points on applique un facteur d'échelle dans l'espace.

Egalement avantageusement pour tester et modifier le troisième fichier permettant d'arriver à la synchronisation on effectue des interpolations linéaires successives jusqu'à ce que la vitesse de calcul de ladite trajectoire soit synchronisée avec la vitesse de mouvement possible du bras de robot, par exemple de l'ordre du dixième de seconde de temps de parcours entre deux points successifs.

Dans un mode de réalisation avantageux les mouvements conduisant une musique ou un fond sonore on synchronise le bras de robot avec ladite musique ou ledit fond sonore.

Egalement avantageusement les mouvements étant ceux du traçage d'un dessin ou de l'application d'une peinture, on synchronise le bras du robot avec le mouvement de traçage du dessin ou de l'application de la peinture.

L'invention sera mieux comprise à la lecture de la description qui suit d'un mode de réalisation donné ci-après à titre d'exemple non limitatif.

Elle fait notamment référence aux dessins qui l'accompagnent dans lesquels:

- La figure 1 est un schéma général montrant un premier mode de réalisation du système de restitution selon l'invention.
- La figure 2 est un organigramme montrant les différentes étapes mises en oeuvre dans une première partie du procédé selon le mode de réalisation de l'invention plus particulièrement décrit.
- La figure 3 est un organigramme montrant les étapes de la deuxième partie du même procédé.

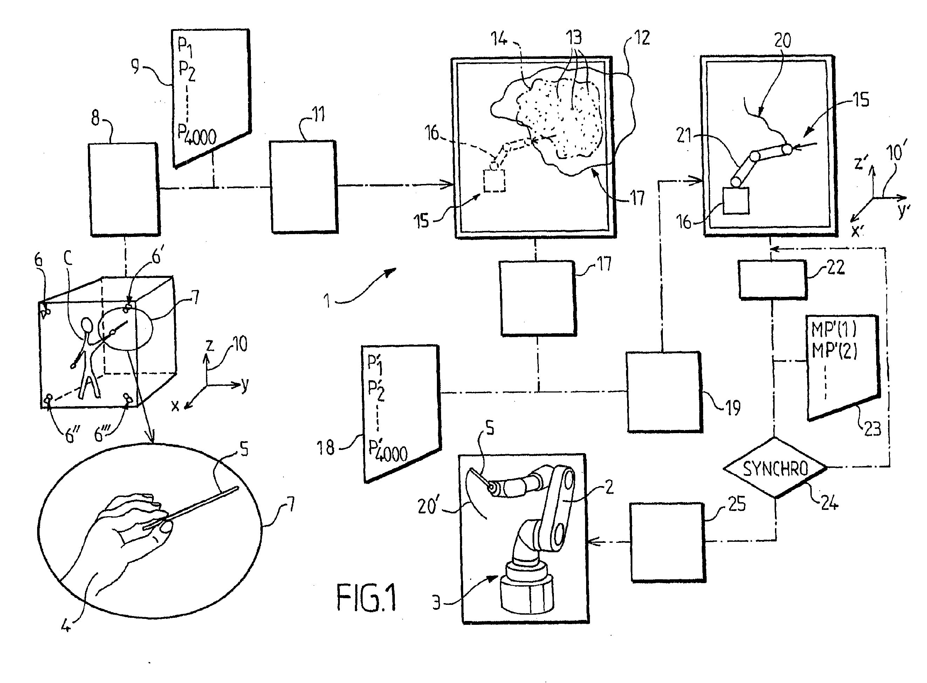

Sur la figure 1 on a représenté un système 1 de restitution par un bras 2 de robot 3 des mouvements d'une main 4 ou d'un organe 5, à partir d'au moins une caméra 6, 6',6"... de capture de l'image en numérique des mouvements.

Le système comprend donc le bras robot 2 et des moyens 8 de traitement de l'image agencés pour former un premier fichier 9 de points (P1, P2,... P4000) dans un premier repère 10 associé aux caméras.

Plus précisément on a donné ci-après un exemple de coordonnées ou paramètres d'entrée des points $P_i$ appartenant au fichier 9.

Le ficher 9 des paramètres d'entrée d'enregistrement des mouvements comporte :

1. Les positions d'entrée de chaque point $P_i$ ou $P_E$ pour Point d'Entrée à savoir pour chaque point :

PE (XE,YE,ZE,Q1,Q2,Q3,Q4),
où XE,YE,ZE sont les positions d'entrées et Q1,Q2,Q3,Q4 sont les orientations selon la notation des quaternions,

2. et un temps T séparant 2 enregistrements initialisé par défaut à 1.

Le système 1 comporte par ailleurs des moyens 11 de génération d'un premier nuage 12 formé par les points 13 dudit premier fichier et d'ajustage des dimensions de ce nuage de points, pour former un deuxième nuage 14 de points de dimension plus réduite qui tienne à l'intérieur du champ 15 de déplacement déterminé correspondant au bras du robot virtuel 16, dans ledit premier repère 10 associé au capteur.

On a décrit ci-après un mode de réalisation de cette phase de génération d'un premier nuage puis du deuxième nuage, utilisant un algorithme par application d'un facteur d'échelle dans l'espace.

Plus précisément on réalise par exemple les fonctions suivantes :

1. Une translation TRANS (PE, t) en fonction de la position de chaque point de l'enregistrement et de l'instant t lui correspondant.

2. Une rotation totale $\mathrm{ROT\_TOT}\left(O,\theta,\vec{u}_x,\vec{u}_y,\vec{u}_z\right)$ de tous les points de l'enregistrement d'un angle $\theta$ autour d'un axe $\left(\vec{u}_x,\vec{u}_y,\vec{u}_z\right)$ par rapport à une origine O.

3. Une rotation partielle $\mathrm{ROT\_PAR}\left(O,\theta,\vec{u}_x,\vec{u}_y,\vec{u}_z,PE,t\right)$ de la position PE associée à l'instant t d'un angle $\theta$ autour d'un axe $\left(\vec{u}_x,\vec{u}_y,\vec{u}_z\right)$ par rapport à une origine O.

4. Une homothétie $\mathrm{HOM}\left(O,\vec{h}_x,\vec{h}_y,\vec{h}_z\right)$ pour la contraction ou la dilatation du nuage de points qui constituent l'enregistrement de la capture de mouvements avec des facteurs correctifs $\left(\vec{h}_x,\vec{h}_y,\vec{h}_z\right)$ selon les direction X,Y,Z et depuis une origine O.

Le système 1 comporte de plus des moyens 17 de génération d'un deuxième fichier 18 (P'1, P'2,... P'4000).

Ces moyens permettent un ré-échantillonnage du nuage de points SYNCH(T) afin de pouvoir synchroniser les trajectoires du robot avec les mouvements originaux. Cette fonction consiste à associer une période T de parcours de deux points consécutifs. Cette période est initialisée à 1.

Un exemple de ce deuxième fichier est fourni dans le tableau 1 ci-après.

TABLEAU 1

| X | Y | Z | Q1 | Q2 | Q3 | Q4 |
|---|---|---|---|---|---|---|
| 1003.86 | 118..863 | 1058 | -0.0255 | -0.4243 | 0.003113 | 0.905291 |
| 1003.21 | 115.075 | 1049.97 | -0.0433 | -0.44036 | 0.013751 | 0.896806 |
| 1004.61 | 112.61 | 1043.76 | -0.05104 | -0.45542 | 0.023099 | 0.88865 |
| ... | | | | | | |

Où :

X, Y, Z sont les coordonnées de l'origine du repère outil exprimées dans le premier repère associé aux capteurs.

Q1, Q2, Q3, Q4 sont les orientations du repère outil exprimées selon la convention des quaternions et dans le premier repère associé aux capteurs.

Puis des moyens 19 de génération d'une trajectoire virtuelle numérique 20 du bras 21 de robot virtuel 16 et de centrage de la trajectoire à l'intérieur du champ 15 de déplacement à partir de ce deuxième fichier 18 sont prévus.

Dans ce cas les paramètres d'entrée correspondant au fichier 18 sont transformés et permettent d'aboutir au fichier de trajectoire robot avec des paramètres de vitesse d'exécution et de lissage (fonctions intrinsèques du robot).

Le système comprend ensuite des moyens 22 de calcul agencés pour transformer géométriquement le deuxième fichier 18 de points en un troisième fichier 23 de points (PM'i) dans un deuxième repère 10' associé au bras du robot.

Si les essais avec cette valeur de 1 révèlent une avance du robot par rapport aux mouvements d'origine (test 24), on procède à un sur-échantillonnage en affectant une valeur comprise entre 0 et 1 à ce temps T puis en procédant à une interpolation linéaire ou tout autre type d'interpolation des positions et orientations des points. Si au contraire le robot est en retard par rapport aux mouvements d'origine, on procède à un sous-échantillonnage en affectant une valeur supérieure 1 à ce temps T puis en procédant à une interpolation linéaire ou tout autre type d'interpolation des positions et orientations des points.

Les moyens de test 24 de la synchronisation des mouvements avec la trajectoire numérique restituée, et en cas de test négatif de modification du troisième fichier jusqu'à l'obtention de la synchronisation, permettent ainsi la synchronisation parfaite ou non des mouvements du robot avec les mouvements originaux.

Un exemple de troisième fichier synchronisé est donné ci-après.

TABLEAU 2

| X | Y | Z |
|---|---|---|
| -176.526 | 106.977 | 322.2 |
| -177.111 | 103.567 | 314.973 |
| -175.851 | 101.349 | 309.384 |
| ... | | |
| | | |
| Xx | Yx | Zx |
| 0.6399 | 0.0273 | 0.768 |
| 0.6118 | 0.0628 | 0.7885 |
| 0.5841 | 0.0875 | 0.8069 |
| | | |
| Xy | Yy | Zy |
| 0.016 | 0.9987 | -0.049 |
| 0.0135 | 0.9959 | -0.09 |
| 0.0054 | 0.9937 | -0.112 |
| | | |
| Xz | Yz | Zz |
| -0.768 | 0.0435 | 0.6386 |
| -0.791 | 0.0655 | 0.6084 |
| -0.812 | 0.0697 | 0.58 |

Où :

X, Y, Z sont les coordonnées de l'origine du repère outil exprimées dans le deuxième repère de travail du robot.
Xx, Yx, Zx sont les coordonnées de l'axe X du repère outil exprimées dans le deuxième repère de travail du robot.
Xy, Yy, Zy sont les coordonnées de l'axe Y du repère outil exprimées dans le deuxième repère de travail du robot.
Xz, Yz, Zz sont les coordonnées de l'axe Z du repère outil exprimées dans le deuxième repère de travail du robot.

Une fois que cette synchronisation est obtenue des moyens 25, connus en eux-mêmes, commandent la trajectoire réelle 20' du bras de robot à partir des données correspondant au troisième fichier synchronisé 23, pour réaliser l'exécution synchronisée des mouvements par le bras de robot.

Pour ce faire ils comportent des moyens de conversion CONV(PE,PS) connus en eux-mêmes permettant la conversion de tous les points PE (X,E,YE,ZE,Q1,Q2,Q3,Q4) en positions PS (XS,YS,ZS,W,P,R) exprimées sous forme de coordonnées robot.

Les positions de sorties de chaque point ou PS sont par exemple:

PS (XS,YS,ZS,W,P,R),

où XS,YS,ZS sont les positions et W,P,R les orientations selon la notation des angles d'Euler roulis, tangage, lacet exprimant respectivement les orientations d'un point selon les axes X, Y et Z dans le repère X', Y', Z' de travail 24 du robot.

Avec l'invention, la capture des mouvements d'artistes renommés va pouvoir être effectuée puis enregistrée et reproduite de façon totalement satisfaisante par le bras de robot. Les mêmes gestes avec les mêmes nuances vont être ainsi reproduits par l'intermédiaire de ce troisième fichier synchronisé de type ASCI, alors qu'une acquisition est faite toutes les 0,1 secondes, et ce avec une précision et une répétabilité du robot, de plus ou moins un dixième de millimètre.

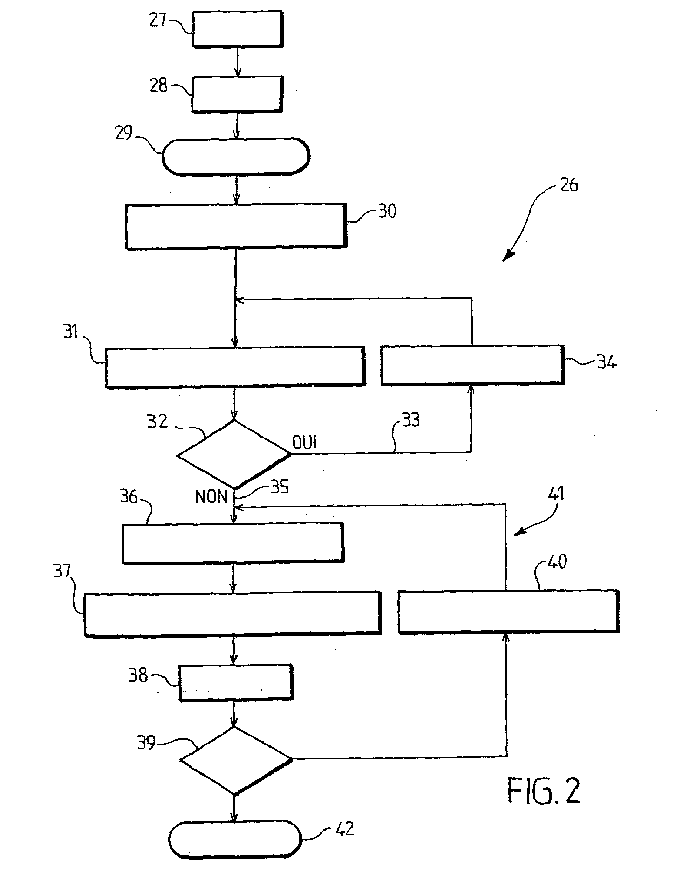

On va maintenant décrire plus précisément en référence à la figure 2 la première séquence 26 mise en oeuvre par le système selon l'invention en faisant par ailleurs également référence à la figure 1.

Cet organigramme décrit la phase 1 de traitement des données issues de cette capture de mouvements. Cette phase permet, comme on l'a vu, d'adapter les positions mesurées par les caméras, ou plus généralement les capteurs numériques, à l'espace atteignable par le robot par des fonctions de translation, rotation totale ou partielle et homothétie pour la dilatation ou la contraction du nuage de points.

Après capture 27 des mouvements par exemple de la main 4 et de la baguette 5 d'un chef d'orchestre C, grâce à un jeu de huit caméras numériques 6, 6', 6"... disposées aux quatre coins d'un cube dans lequel le chef d'orchestre opère, lesdites caméras étant dirigées vers le chef d'orchestre de façon à obtenir une image de l'objet sous tous les angles nécessaires, en utilisant des caméras de type connues en elles-mêmes, on constitue le fichier 9 en 28.

On peut également à cette occasion et s'il y a lieu, pour mieux digitaliser le mouvement de la baguette, utiliser un ou plusieurs capteurs du type connu, qui peuvent être par exemple des sphères recouvertes de papier réfléchissant, lesdites sphères étant fixées par adhésif sur la baguette, par exemple en plusieurs endroits.

Après une initialisation du procédé en 29, on lit en 30 le fichier issu de la capture du mouvement.

On génère ensuite en 31 le nuage de points 13, que l'on compare en 32 avec le champ de déplacement du robot 15, par le biais de moyens de comparaison connus en eux-mêmes.

Dans le cas où le nuage se révèle hors zone du champ 15 (liaison 33) on applique en 34 un facteur d'échelle par exemple géométrique, qui permet de reconstituer un nouveau nuage 14 à l'intérieur du champ 15.

Le test 32 étant négatif en 35 (après application du facteur d'échelle s'il y a lieu) on génère en 36 le deuxième fichier de données 18.

On effectue ensuite en 37 la transformation géométrique nécessaire pour passer de la représentation des points dans le repère 10 de la caméra au repère 10' du robot, de façon connue en elle-même et comme indiqué ci-avant, puis on implante en 38 ces données dans la représentation de la trajectoire par le robot.

On teste alors en 39 pour vérifier si la synchronisation des mouvements virtuels des robots avec la musique est OK en comparant avec un fichier musical (non représenté).

Dans le cas où la synchronisation n'est pas bonne on modifie (en général on réduit) le nombre de points par interpolation linéaire (bloc 40) afin de générer un nouveau fichier 23 qui, par itération successive (boucle 41) se rapproche de la synchronisation.

Ainsi en réduisant le nombre de points on accélère leur traitement jusqu'à obtenir une vitesse de succession synchrone avec le tempo de la musique et cohérente avec les capacités de restitution en vitesse du robot mécanique.

Puis on quitte la première partie du procédé et on peut alors démarrer en 42 la deuxième partie 43 dudit procédé, qui commande la trajectoire réelle 24 du bras 2 de robot 3 à partir des données correspondant à ce troisième fichier synchronisé 23.

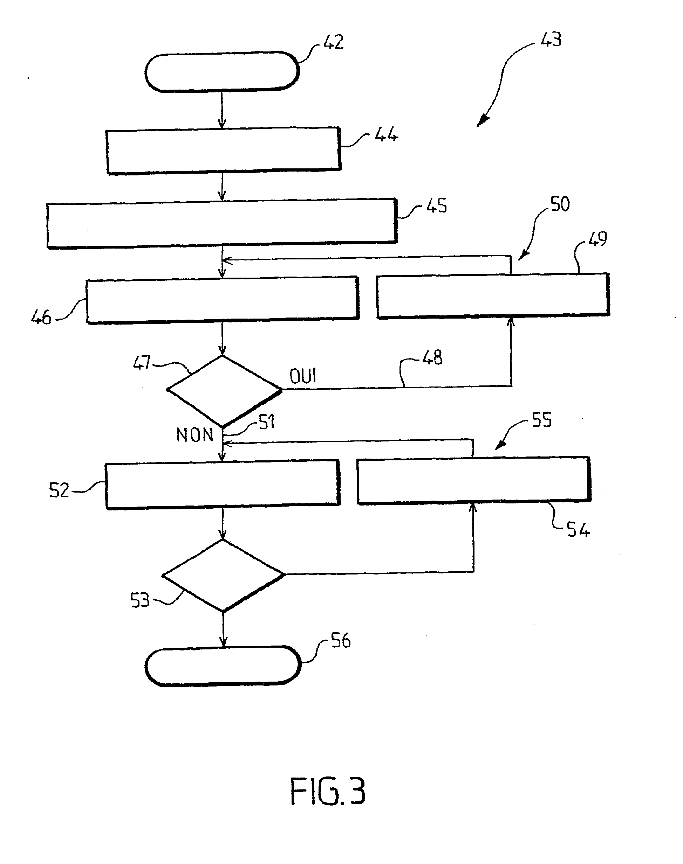

Cette phase décrite par l'organigramme de la figure 3 permet la lecture de données issues de la phase 1 ligne par ligne et :

1. de les associer à un repère outil (baguette d'un chef d'orchestre, projecteur par un éclairagiste de spectacle, crayon, feutre ou pinceau pour un dessinateur, caméra ou appareil photo pour le métier de la télévision et du cinéma, ou le pistolet de peinture dans l'industrie automobile,... etc.

2. de les associer à un repère d'utilisation représentant la scène d'évolution du robot.

3. de générer une trajectoire lisible (dans le langage du robot) et exécutable par le robot.

4. de réajuster le cas échéant des positions et orientations des repères outils et repère d'utilisation par des fonctions de translation ou de rotation de repères.

5. d'exécuter la trajectoire.

Plus précisément l'algorithme d'implantation des données d'exécution de la trajectoire par le robot 3 va maintenant être décrit et constitue le test ultime permettant l'étalonnage et une parfaite répétitivité ultérieure.

En 44 il y a lecture du troisième fichier 23.

On applique alors en 45 les repères du type outils, baguette, spot écran, pistolet de peinture,... dans le repère de travail du robot 10'. La génération de la trajectoire du robot dans le cadre du champ 15 s'effectue ensuite en 46. Si le centrage n'est pas bon (test 47), on déplace (lien 48), en 49, le nuage de points par translation et rotation, de façon connue en elle-même, jusqu'à régénérer une nouvelle trajectoire de robot en 46, et ce de façon itérative (boucle 50).

Une fois la trajectoire centrée (lien 51) l'exécution du mouvement est effectuée par le robot en 52.

Si, à ce stade celui-ci n'est mécaniquement pas synchronisé (test 53) (par exemple avec la musique en cas d'une application « chef d'orchestre »), il y a à nouveau synchronisation en 54 comme décrit en référence à la boucle 40, et ce de façon itérative (boucle 55) avant obtention d'une trajectoire synchronisée satisfaisante en 56.

Comme il va de soi et comme il résulte également de ce qu'il précède, la présente invention n'est pas limitée aux modes de réalisation plus particulièrement décrits. Elle en embrasse au contraire toutes les variantes et notamment celles ou d'autres algorithmes remplissent les mêmes fonctions, en vue d'un même résultat, telles que définies dans les revendications.

## Revendications

1.  Système (1) de restitution par un bras (2) de robot (3) des mouvements d'une main (4) ou d'un organe (5) enregistrés à partir d'au moins un capteur numérique (6, 6', ...) de l'image desdits mouvements, comprenant le bras de robot (2) et des moyens (8) de traitement de l'image agencés pour former un premier fichier (9) de points ($P_1$, $P_2$, ... $P_{4000}$) dans un premier repère (10) associé audit capteur, **caractérisé en ce que**, les mouvements et leur restitution devant être synchronisés, il comprend

    des moyens (11) de génération d'un premier nuage (12) formé par les points (13) dudit premier fichier et d'ajustage des dimensions dudit nuage de points pour former un deuxième nuage (14) de points à l'intérieur d'un champ (15) de déplacement déterminé correspondant au bras virtuel du robot dans ledit premier repère (10) associé au capteur,

    des moyens (17) de génération d'un deuxième fichier (18) de points ($P'_1$, $P'_2$,...) à partir dudit deuxième nuage (14) ainsi ajusté en dimension,

    des moyens (22) de calcul agencés pour transformer géométriquement ledit deuxième fichier (18) de points en un troisième fichier (23) de points ($MP_1$, $MP_2$, ...) dans un deuxième repère (10') associé au bras de robot,

    des moyens (19) de génération d'une trajectoire numérique (20) du bras (22) de robot virtuel et de centrage de ladite trajectoire à l'intérieur dudit champ (15) de déplacement à partir dudit deuxième fichier (18),

    des moyens (24) de test de la synchronisation des mouvements avec ladite trajectoire numérique restituée et, en cas de test négatif, de modification du troisième fichier jusqu'à l'obtention de ladite synchronisation et

    des moyens (25) de commande de la trajectoire réelle (20') dudit bras de robot, à partir des données correspondant au troisième fichier synchronisé (23) pour exécution synchronisée des mouvements par le bras de robot.

2.  Système selon la revendication 1, **caractérisé en ce que** les moyens (11) d'ajustage de la dimension du nuage de points mettent en oeuvre un algorithme appliquant un facteur d'échelle dans l'espace.

3.  Système selon l'une quelconque des revendications 1 et 2, **caractérisé en ce que** les moyens (24) de test et de modification du troisième fichier (23) pour arriver à la synchronisation mettent en oeuvre un algorithme d'interpolation linéaire.

4.  Système selon la revendication 3, **caractérisé en ce que** l'algorithme d'interpolation linéaire recalcule par itération le nombre de points de la trajectoire à prendre en compte pour que la vitesse de calcul de la dite trajectoire soit synchronisée avec la vitesse de mouvement possible du bras de robot.

5.  Système selon l'une quelconque des revendications précédentes, **caractérisé en ce que** les mouvements conduisant ou suivant une musique ou un fond sonore, le bras de robot est agencé pour être synchronisé avec ladite musique ou ledit fond sonore.

6.  Système selon l'une quelconque des revendication 1 à 4, **caractérisé en ce que** les mouvements étant ceux du traçage d'un dessin ou de l'application d'une peinture, le bras du robot est agencé pour être synchronisé avec le mouvement de traçage du dit dessin ou d'application de ladite peinture.

7. Procédé de restitution de mouvements d'une main ou d'un organe, par un bras de robot à partir d'au moins un capteur numérique de l'image desdits mouvements, dans lequel on traite l'image pour former un premier fichier de points dans un premier repère associé audit capteur numérique, **caractérisé en ce que**, les mouvements et leur restitution devant être synchronisés,
on génère un premier nuage formé par les points dudit premier fichier et on ajuste les dimensions dudit premier nuage de points pour former un deuxième nuage de points à l'intérieur d'un champ de déplacement déterminé correspondant audit bras dans ledit premier repère associé au capteur,
on génère un deuxième fichier de points à partir dudit deuxième nuage ainsi ajusté en dimension,
on génère une trajectoire du bras de robot et on centre ladite trajectoire à l'intérieur dudit champ de déplacement à partir dudit deuxième fichier,
on transforme géométriquement ledit deuxième fichier de points dans un troisième fichier de points dans un deuxième repère associé au bras de robot,
on teste la synchronisation des mouvements et, en cas de test négatif, on modifie le troisième fichier jusqu'à l'obtention de ladite synchronisation et on commande la trajectoire dudit bras de robot à partir des données correspondant au troisième fichier synchronisé, pour exécuter lesdits mouvements par le bras de robot.

8. Procédé selon la revendication 7, **caractérisé en ce que** pour ajuster la dimension du nuage de points on applique un facteur d'échelle dans l'espace.

9. Procédé selon l'une quelconque des revendications 7 et 8, **caractérisé en ce que** pour tester et modifier le troisième fichier pour arriver à la synchronisation on effectue des interpolations linéaires successives jusqu'à ce que la vitesse de calcul de la dite trajectoire soit synchronisée avec la vitesse de mouvement possible du bras de robot.

10. Procédé selon l'une quelconque des revendications 7 à 9, **caractérisé en ce que** les mouvements conduisant une musique ou un fond sonore, on synchronise le bras de robot avec ladite musique ou ledit fond sonore.

11. Procédé selon l'une quelconque des revendications 7 à 9, **caractérisé en ce que** les mouvements étant ceux du traçage d'un dessin ou de l'application d'une peinture, on synchronise le bras du robot avec le mouvement de traçage du dit dessin ou d'application de ladite peinture

**Patentansprüche**

1. System (1), um mit einem Arm (2) eines Roboters (3) Bewegungen einer Hand (4) oder eines Organs (5) wiederzugeben, die von mindestens einem digitalen Sensor (6, 6', ...) zur Aufnahme des Bildes der Bewegungen aufgezeichnet werden, umfassend den Roboterarm (2) und Mittel (8) für die Bearbeitung des Bildes, welche angeordnet sind, um eine erste Datei (9) aus Punkten ($P_1$, $P_2$, ... $P_{4000}$) in einem ersten, dem Sensor zugeordneten Bezugssystem (10),
**dadurch gekennzeichnet,**
**dass** bei notwendiger Synchronisation der Bewegungen und deren Wiedergabe es Folgendes umfasst:

- Mittel (11) für die Erzeugung einer ersten Cloud (12), die durch die Punkte (13) der ersten Datei gebildet wird, und für die Einstellung der Abmessungen der Punkte-Cloud zur Bildung einer zweiten Punkte-Cloud (14) innerhalb eines bestimmten Bewegungsfeldes (15), das dem virtuellen Roboterarm in dem ersten, dem Sensor zugeordneten Bezugssystem (10) entspricht,
- Mittel (17) für die Erzeugung einer zweiten Datei (18) aus Punkten ($P'_1$, $P'_2$, ...) aufgrund der zweiten Cloud (14), deren Größe somit eingestellt wird,
- Rechenmittel (22), die angeordnet sind, um die zweite Punktedatei (18) geometrisch in eine dritte Datei (23) aus Punkten ($MP_1$, $MP_2$, ...) in einem zweiten, dem Roboterarm zugeordneten Bezugssystem (10') umzuwandeln,
- Mittel (19) für die Erzeugung eines digitalen Verfahrweges (20) des virtuellen Roboterarms (22) und für das Zentrieren des Verfahrweges innerhalb des Bewegungsfeldes (15) aufgrund der zweiten Datei (18),
- Mittel (24), um die Synchronisation der Bewegungen mit dem wiedergegebenen digitalen Verfahrweg zu testen und um bei negativem Test die dritte Datei zu ändern, bis die Synchronisation erreicht ist, und
- Mittel (25) für die Steuerung des realen Verfahrweges (20') des Roboterarms für die synchronisierte Ausführung des Bewegungen durch den Roboterarm aufgrund der Daten, die der dritten synchronisierten Datei (23) entsprechen.

2. System nach Anspruch 1,
   **dadurch gekennzeichnet,**
   **dass** die Mittel (11) für die Einstellung der Größe der Punkte-Cloud einen Algorithmus einsetzen, bei dem ein räumlicher Skalierungsfaktor angewendet wird.

3. System nach einem beliebigen der Ansprüche 1 und 2,
   **dadurch gekennzeichnet,**
   **dass** die Mittel (24) zum Testen und Ändern der dritten Datei (23) zum Erreichen der Synchronisation einen Linearinterpolationsalgorithmus einsetzen.

4. System nach Anspruch 3,
   **dadurch gekennzeichnet,**
   **dass** der Linearinterpolationsalgorithmus die zu berücksichtigende Anzahl der Punkte des Verfahrweges durch Iteration neu berechnet, um die Geschwindigkeit der Berechnung des Verfahrweges mit der möglichen Bewegungsgeschwindigkeit des Roboterarms zu synchronisieren.

5. System nach einem beliebigen der vorhergehenden Ansprüche,
   **dadurch gekennzeichnet,**
   **dass** bei eine Musik bzw. Hintergrundgeräusche dirigierenden bzw. sich danach richtenden Bewegungen der Roboterarm angeordnet ist, um mit der Musik bzw. den Hintergrundgeräuschen synchronisiert zu werden.

6. System nach einem beliebigen der Ansprüche 1 bis 4,
   **dadurch gekennzeichnet,**
   **dass** die Bewegungen diejenigen des Zeichnens einer Zeichnung bzw. des Auftragens einer Farbe sind, wobei der Roboterarm angeordnet ist, um mit der Bewegung des Zeichnens einer Zeichnung bzw. des Auftragens der Farbe synchronisiert zu werden.

7. Verfahren für die Wiedergabe von Bewegungen einer Hand oder eines Organs mit einem Roboterarm mittels mindestens eines digitalen Sensors zur Aufnahme des Bildes der Bewegungen, bei dem das Bild bearbeitet wird, um eine erste Punktedatei in einem ersten, dem digitalen Sensor zugeordneten Bezugssystem zu bilden, **dadurch gekennzeichnet, dass** bei notwendiger Synchronisation der Bewegungen und deren Wiedergabe

   - eine erste Cloud erzeugt wird, die durch die Punkte der ersten Datei gebildet wird, und die Abmessungen der ersten Punkte-Cloud eingestellt werden, um eine zweite Punkte-Cloud innerhalb eines bestimmten Bewegungsfeldes zu bilden, das dem Arm in dem ersten, dem Sensor zugeordneten Bezugssystem entspricht,
   - eine zweite Punktedatei aufgrund der zweiten Cloud erzeugt wird, deren Größe somit eingestellt wird,
   - ein Verfahrweg des Roboterarms erzeugt wird und der Verfahrweg innerhalb des Bewegungsfeldes aufgrund der zweiten Datei zentriert wird,
   - die zweite Punktedatei geometrisch in eine dritte Punktedatei in einem zweiten, dem Roboterarm zugeordneten Bezugssystem umgewandelt wird und
   - die Synchronisation der Bewegungen getestet wird und die dritte Datei bei negativem Test geändert wird, bis die Synchronisation erreicht ist, und der Verfahrweg des Roboterarms für die Ausführung der Bewegungen durch den Roboterarm aufgrund der Daten gesteuert wird, die der dritten synchronisierten Datei entsprechen.

8. Verfahren nach Anspruch 7,
   **dadurch gekennzeichnet,**
   **dass** zur Einstellung der Größe der Punkte-Cloud ein räumlicher Skalierungsfaktor angewendet wird.

9. Verfahren nach einem beliebigen der Ansprüche 7 und 8,
   **dadurch gekennzeichnet,**
   **dass** zum Testen und Ändern der dritten Datei zur Erreichung der Synchronisation aufeinanderfolgende lineare Interpolationen durchgeführt werden, bis die Geschwindigkeit der Berechnung des Verfahrweges mit der möglichen Bewegungsgeschwindigkeit des Roboterarms synchronisiert ist.

10. Verfahren nach einem beliebigen der Ansprüche 7 bis 9,

**dadurch gekennzeichnet,**
**dass** bei eine Musik bzw. Hintergrundgeräusche dirigierenden Bewegungen der Roboterarm mit der Musik bzw. mit den Hintergrundgeräuschen synchronisiert wird.

11. Verfahren nach einem beliebigen der Ansprüche 7 bis 9,
**dadurch gekennzeichnet,**
**dass** bei Bewegungen, welche diejenigen des Zeichnens einer Zeichnung bzw. des Auftragens einer Farbe sind, der Roboterarm mit der Bewegung des Zeichnens der Zeichnung bzw. des Auftragens der Farbe synchronisiert wird.

**Claims**

1. System (1) for reproduction by an arm (2) of a robot (3) of the movements of a hand (4) or of a member (5) recorded using at least one digital sensor (6, 6', ...) of the image of said movements, comprising the robot arm (2) and means (8) for processing the image arranged to form a first file (9) of points ($P_1$, $P_2$, ... $P_{4000}$) in a first frame of reference (10) associated with said sensor, **characterised in that**, as the movements and their reproduction have to be synchronised, it comprises
means (11) for generating a first cloud (12) formed by the points (13) of said first file and for adjusting the size of said cloud of points to form a second cloud (14) of points inside a predetermined field of movement (15) corresponding to the virtual arm of the robot in said first frame of reference (10) associated with the sensor,
means (17) for generating a second file (18) of points ($P'_1$, $P'_2$, ...) using said second cloud (14) thus adjusted in size,
means (22) for calculating arranged to convert said second file (18) of points geometrically into a third file (23) of points ($MP_1$, $MP_2$, ...) in a second frame of reference (10') associated with the robot arm,
means (19) for generating a digital path (20) for the virtual robot arm (22) and for centering said path inside said field of movement (15) using said second file (18),
means (24) for testing the synchronisation of the movements with said digital path reproduced and, in the case of a negative test, for modifying the third file until said synchronisation is obtained, and
means (25) for controlling the actual path (20') of said robot arm, using data corresponding to the synchronised third file (23) for synchronised execution of the movements by the robot arm.

2. System according to claim 1, **characterised in that** the means (11) for adjusting the size of the cloud of points implement an algorithm applying a spatial scaling factor.

3. System according to any one of claims 1 and 2, **characterised in that** the means (24) for testing and for modifying the third file (23) to achieve the synchronisation implement a linear interpolation algorithm.

4. System according to claim 3, **characterised in that** the linear interpolation algorithm recalculates by iteration the number of points of the path to be taken into account for the speed of calculation of said path to be synchronised with the possible speed of movement of the robot arm.

5. System according to any one of the preceding claims, **characterised in that** when the movements conduct or follow a piece of music or a background sound track, the robot arm is arranged to be synchronised with said piece of music or said background sound track.

6. System according to any one of claims 1 to 4, **characterised in that** when the movements are those of tracing a drawing or the application of a paint, the arm of the robot is arranged to be synchronised with the movement of tracing said drawing or of application of said paint.

7. Method for reproduction of movements of a hand or of a member, by a robot arm using at least one digital sensor of the image of said movements, in which the image is processed to form a first file of points in a first frame of reference associated with said digital sensor, **characterised in that**, as the movements and their reproduction have to be synchronised,
a first cloud is generated formed by the points of said first file and the size of said first cloud of points is adjusted to form a second cloud of points inside a predetermined field of movement corresponding to said arm in said first frame of reference associated with the sensor,
a second file of points is generated using said second cloud thus adjusted in size,
a path is generated for the robot arm and said path is centered inside said field of movement using said second file,
said second file of points is converted geometrically into a third file of points in a second frame of reference associated with the robot arm,

the synchronisation of the movements is tested and, in the case of a negative test, the third file is modified until said synchronisation is obtained and the path of said robot arm is controlled using the data corresponding to the third synchronised file for execution of said movements by the robot arm.

8. Method according to claim 7, **characterised in that** to adjust the size of the cloud of points, a spatial scaling factor is applied.

9. Method according to any one of claims 7 and 8, **characterised in that** to test and modify the third file to achieve the synchronisation, successive linear interpolations are carried out until the speed of calculation of said path is synchronised with the possible speed of movement of the robot arm.

10. Method according to any one of claims 7 to 9, **characterised in that** when the movements conduct a piece of music or a background sound track, the robot arm is synchronised with said piece of music or said background sound track.

11. Method according to any one of claims 7 to 9, **characterised in that** when the movements are those of tracing a drawing or the application of applying a paint, the robot arm is synchronised with the movement of tracing said drawing or of application of said paint.

FIG.1

FIG.2

FIG.3

**RÉFÉRENCES CITÉES DANS LA DESCRIPTION**

**Documents brevets cités dans la description**

- WO 2005046942 A

- DE 4442443

**Littérature non-brevet citée dans la description**

- Robot imitation : body schéma and body percept. **C.A.ACOSTA-CALDERON ; H.HU - WOODHEAD.** ABBI. Publishing Ltd, 2005, vol. 2, 131-148